# FASCICULE DE BREVET EUROPEEN

(11) **EP 1 304 063 B1**
(45) Date de publication et mention de la délivrance du brevet: **27.09.2006**
(21) Numéro de dépôt: 02356199.6
(22) Date de dépôt: 09.10.2002
(51) Int. Cl.: A47J 37/12

(54) **Appareil de cuisson à cuve comportant un dispositif de vidange securisé**
Kochgerät mit Behälter sowie eine Entleerungsvorrichtung
Cooking apparatus with receptacle having a drain device

(30) Priorité: 17.10.2001 FR 0113395
(43) Date de publication de la demande: 23.04.2003
(73) Titulaire: SEB S.A., 69130 Ecully (FR)
(72) Inventeur: Bizard, Jean-Claude, 21121 Fontaine les Dijon (FR)
(74) Mandataire: Kiehl, Hubert

(56) Documents cités:
- DE-A- 19 907 150
- DE-U- 9 315 764
- GB-A- 661 921
- US-A- 3 845 702

## Description

La présente invention se rapporte au domaine technique général des appareils de cuisson comportant une cuve prévue pour recevoir un bain de cuisson. La présente invention concerne plus particulièrement les appareils du type précité comprenant un dispositif de vidange du bain de cuisson contenu dans la cuve.

La présente invention concerne notamment, mais non exclusivement, les friteuses. En effet le bain de cuisson n'est pas limité à un bain d'huile ou de matière grasse fondue, mais peut également consister en toute matière alimentaire suffisamment fluide pour s'écouler par un dispositif de vidange, et en particulier un liquide à base d'eau.

Il est connu des documents US 2 597 695, CH 325 786 et FR 2 665 068 des friteuses comportant un conduit de vidange. Toutefois aucun réceptacle de collecte de l'huile n'est prévu. Le document FR 2 773 976 décrit une friteuse comportant un conduit de vidange et un réceptacle supporté par un tiroir monté dans le boîtier de l'appareil. L'utilisation de tels appareils nécessite une grande attention de la part de l'utilisateur du fait de la vidange de l'huile hors du boîtier.

Il est connu du document US 2 867 164 une friteuse de type industriel comportant une cuve et un réceptacle de vidange logés dans un bâti. La cuve comporte un conduit de vidange fermé par une vanne. Le réceptacle de vidange est monté de manière amovible sur la face intérieure d'une porte du bâti. La transposition d'une telle réalisation dans un appareil domestique apparaît peu sécurisante.

L'objet de la présente invention est d'augmenter la sécurité des appareils de cuisson comportant une cuve munie d'un dispositif de vidange.

Un autre objet de la présente invention est d'améliorer la commodité d'utilisation des appareils de cuisson comportant une cuve munie d'un dispositif de vidange.

Un objet additionnel de la présente invention est de proposer un appareil du type précité dont la construction reste simple.

Un objet additionnel de la présente invention est de proposer un appareil du type précité dont la construction soit compacte.

Ces objets sont atteints avec un appareil de cuisson comportant un boîtier et dans ce boîtier une cuve prévue pour recevoir un bain de cuisson, munie d'un dispositif de vidange prévu pour un déversement du contenu de la cuve dans un réceptacle de vidange, le dispositif de vidange étant associé à un bouton de manoeuvre, le réceptacle de vidange étant agencé de manière amovible par rapport au boîtier, du fait que le bouton de manoeuvre est susceptible d'entraîner un clapet appartenant au dispositif de vidange, par l'intermédiaire d'un mécanisme de commande monté sur le réceptacle de vidange. Ainsi, en l'absence du réceptacle de vidange l'utilisateur ne risque pas de procéder à une vidange de l'appareil. De plus, du fait que le mécanisme de commande est monté sur le réceptacle de vidange, la cuve peut être amovible par rapport au boîtier, et peut ainsi passer au lave-vaisselle. Le réceptacle de vidange peut être disposé dans le boîtier ou encore former un socle sur lequel repose le boîtier.

Avantageusement, le bouton de manoeuvre est monté sur le réceptacle de vidange. Cette disposition permet de simplifier la construction. En alternative, le bouton de manoeuvre peut par exemple être monté sur le boîtier.

Avantageusement, le boîtier comporte une ouverture latérale dans laquelle peut être inséré au moins partiellement le réceptacle de vidange. Cette disposition permet de faciliter la manipulation du réceptacle de vidange. En alternative, le boîtier peut par exemple être réalisé en deux parties, une partie supérieure entourant au moins partiellement la cuve, et une partie inférieure supportant le réservoir de vidange, la partie supérieure étant retirée pour accéder au réservoir de vidange.

Avantageusement alors, le bouton de manoeuvre est monté sur une face latérale extérieure du réceptacle de vidange. Cette disposition permet de simplifier la construction. En alternative, le bouton de manoeuvre peut par exemple être accessible par une trappe ménagée sur une face du boîtier.

Selon un mode de réalisation, le mécanisme de commande comporte une came prévue pour coopérer avec le clapet. Une telle réalisation est simple et fiable.

Avantageusement alors la came est portée par une pièce mobile de commande montée sur un conduit d'admission communiquant avec le réceptacle de vidange, la pièce mobile de commande comportant un entonnoir prévu pour alimenter une ouverture de remplissage du conduit d'admission lorsque la came ouvre le clapet. Une telle réalisation permet de limiter le nombre de pièces.

Avantageusement alors, la pièce mobile de commande est entraînée en rotation par le bouton de manoeuvre. Une telle réalisation est particulièrement simple et fiable.

Avantageusement encore la came est agencée au dessus de l'entonnoir. Cette disposition permet d'obtenir un mécanisme de commande particulièrement compact.

Avantageusement encore, le mécanisme de commande comporte un pêne prévu pour coopérer avec une gâche appartenant au clapet lorsque le clapet est amené en position ouverte. Cette disposition permet de verrouiller le réceptacle de vidange pour éviter un retrait dudit réceptacle du boîtier pendant les opérations de vidange.

Alors, selon une construction avantageuse, le pêne est formé par une face latérale de la came. Cette disposition permet de simplifier la réalisation.

Alors, selon une construction avantageuse, la gâche est formée par une fente longitudinale ménagée à l'extrémité inférieure d'un conduit dans lequel est logé une pièce mobile d'obturation du clapet déplacée par la came. Cette disposition permet également de simplifier la réalisation.

Avantageusement encore une pièce mobile de sécurité comporte une première came prévue pour être entraînée par le mécanisme de commande lorsque le bouton de manoeuvre est manoeuvré pour ouvrir le clapet, une deuxième came prévue pour être entraînée par le mécanisme de commande lorsque le bouton de manoeuvre est manoeuvré ensuite pour fermer le clapet, et une butée de blocage prévue pour bloquer le mécanisme de commande afin d'empêcher l'ouverture du clapet. Cette disposition empêche de réaliser une nouvelle vidange si le réceptacle de vidange n'a pas été retiré au moins partiellement du boîtier puis remis en place.

Avantageusement alors la pièce mobile de sécurité est repoussée par le réceptacle de vidange lors de la mise en place dudit réceptacle dans le boîtier par l'intermédiaire d'une lame flexible s'effaçant lorsque la pièce mobile de sécurité atteint une butée d'arrêt. Cette disposition permet d'assurer d'une manière simple le positionnement de la pièce mobile de sécurité lors de la mise en place du réceptacle dans le boîtier.

Selon une disposition avantageuse, le dispositif de vidange comporte un clapet thermostatique. Cette disposition permet d'améliorer encore la sécurité de l'appareil. Cette disposition permet aussi d'utiliser des matériaux moins nobles, donc moins onéreux, pour le réceptacle de vidange et/ou pour le mécanisme de commande.

Selon une autre disposition avantageuse, un filtre est agencé en amont du dispositif de vidange. Cette disposition permet d'éviter que des résidus présents dans le bain de cuisson affectent le fonctionnement du dispositif de vidange. Cette disposition permet également d'améliorer la qualité du bain de cuisson lors de fritures successives avec le même bain.

L'invention sera mieux comprise à l'étude de l'exemple de réalisation suivant, pris à titre nullement limitatif, illustré dans les figures annexées, dans lesquelles :
- la figure 1 est une vue montrant un appareil de cuisson selon l'invention, dans la position prévue pour la vidange du contenu de la cuve, le boîtier extérieur étant représenté en pointillés,
- la figure 2 est une vue partielle de l'appareil montré à la figure 1, dans une position après la vidange de la cuve, montrant le dispositif de sécurité prévu pour éviter deux vidanges consécutives sans retrait au moins partiel du réceptacle de vidange,
- la figure 3 est une vue partielle en coupe transversale de l'appareil montré à la figure 1, dans une position après la vidange de la cuve,
- la figure 4 est une vue partielle en coupe transversale de l'appareil montré à la figure 1, dans la position prévue pour la vidange du contenu de la cuve,
- la figure 5 est une vue partielle du réceptacle de vidange lors de sa remise en place dans le boîtier,
- la figure 6 est une vue partielle du réceptacle de vidange remis en place dans le boîtier, avant une nouvelle opération de vidange.

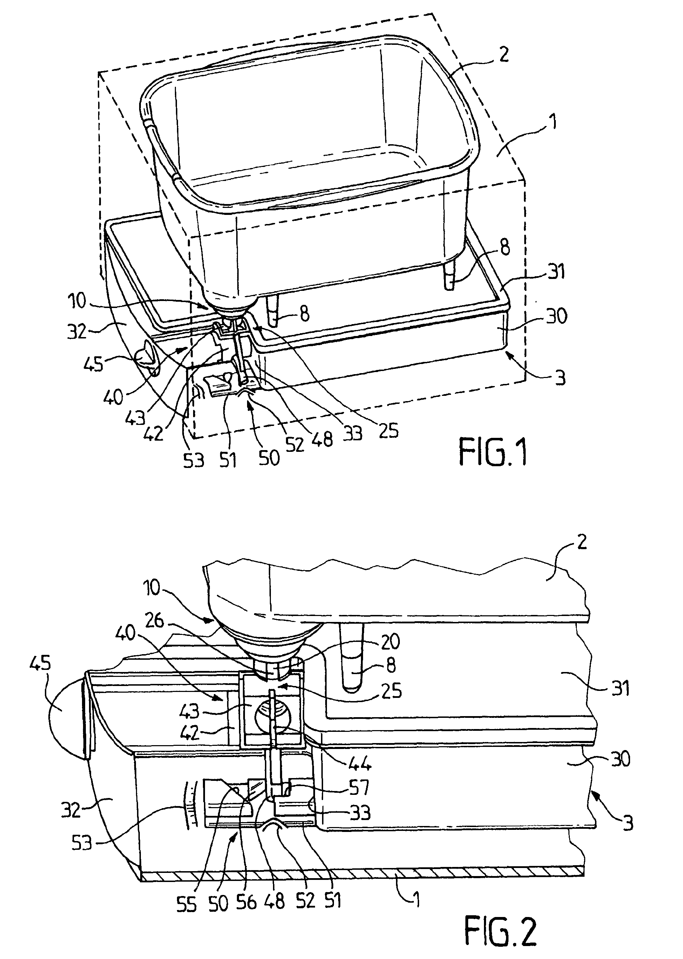

L'appareil illustré aux figures 1 à 6 est une friteuse comportant un boîtier 1 présentant une ouverture supérieure recevant une cuve 2 prévue pour recevoir un liquide de cuisson. L'ouverture supérieure peut être fermée par un couvercle, non représenté aux figures. Le boîtier 1 présente également une ouverture latérale dans laquelle est engagé un réceptacle de vidange 3.

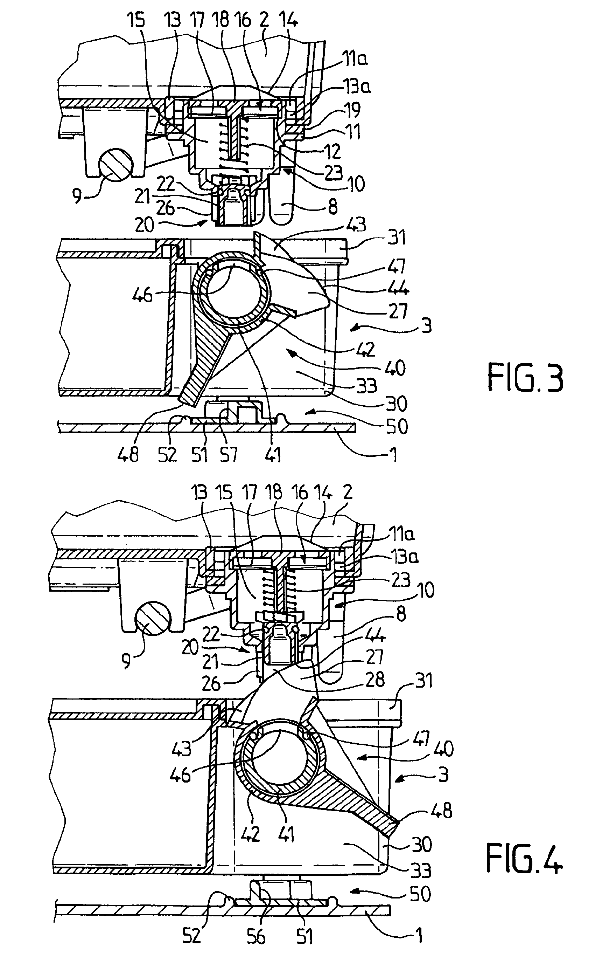

Tel que mieux visible aux figures 3 et 4, la cuve 2 comporte un dispositif de vidange 10. La cuve 2 est avantageusement amovible et comporte des moyens, tels que des pieds 8, prévus pour permettre de poser la cuve sur un plan de travail. Si désiré, des moyens de chauffage électriques 9 peuvent être fixés sous la cuve 2. A titre de variante, les moyens de chauffage électriques peuvent être agencés dans le boîtier 1 ou encore dans la cuve 2.

Le dispositif de vidange 10 comprend un conduit d'évacuation 15 issu du fond de la cuve 2. Le conduit 15 est protégé par un filtre 14. Un clapet à ressort 20 obture la partie inférieure du conduit 15. Un clapet thermostatique 16 est agencé entre le filtre 14 et le clapet à ressort 20.

Le conduit 15 est formé par un corps 11 avantageusement réalisé en une matière plastique résistante aux températures élevées du bain de cuisson, par exemple de l'Amodel résistant jusqu'à 250°C dans le cas d'une friteuse. Le corps 11 est monté amovible par rapport à la cuve 2. Un joint 19 est interposé entre la cuve 2 et le corps 11. Le joint 19 est avantageusement solidaire du corps 11 pour éviter une perte lors du démontage du dispositif de vidange ou un oubli lors du remontage dudit dispositif.

Le filtre 14 est monté amovible par rapport à la cuve 2 et au corps 11. Selon l'exemple de réalisation illustré aux figures, le filtre 14 est solidaire d'une couronne 13 assemblée par baïonnette avec le corps 11. La couronne 13 est logée de manière amovible dans un renfoncement du fond de la cuve 2. La couronne 13 est immobilisée en rotation par rapport à la cuve 2. La partie supérieure du corps 11 est engagée dans une ouverture ménagée dans le fond de la cuve 2, et porte des rampes 11a coopérant avec des rampes 13a de la couronne 13 pour former l'assemblage par baïonnette.

Le clapet thermostatique 16 comprend une coupelle bimétallique à retournement 17 fixée sur la face inférieure d'une plaque perforée 18 obturant l'extrémité supérieure du corps 11. La plaque 18 est par exemple sertie à l'intérieur du corps 11.

La coupelle 17 est représentée aux figures 3 et 4 en position ouverte correspondant à la position basse température. La coupelle 17 en position haute température obture le conduit 15 en venant en appui contre un épaulement annulaire interne 12 du corps 11. La température de transition entre la position haute température et la position basse température lors du refroidissement est par exemple de l'ordre de 90°C dans le cas d'une friteuse.

Le clapet à ressort 20 comporte une pièce mobile d'obturation 21 équipée d'un joint périphérique torique 22. La pièce 21 est montée sur un ressort 23 s'appuyant contre la face inférieure de la coupelle 17. La position de repos du ressort 23 correspond à la figure 3 dans laquelle le clapet 20 est fermé.

Le réceptacle de vidange 3 présente un volume suffisant pour recevoir le bain de cuisson contenu dans la cuve 2. Le réceptacle de vidange 3 comprend un bac récupérateur 30 fermé par un couvercle 31. Le réceptacle de vidange 3 présente une face latérale extérieure 32. Si désiré, la face 32 peut être réalisée au moins partiellement en matériau transparent ou translucide pour permettre à l'utilisateur de voir le remplissage du réceptacle de vidange 3.

Le réceptacle de vidange 3 comprend également un mécanisme de commande 40 de la vidange, avantageusement monté sur le bac récupérateur 30. Le mécanisme de commande 40 comprend une pièce mobile de commande 42 montée autour d'un conduit d'admission 41 débouchant dans une paroi latérale 33 du bac 30. La pièce mobile de commande 42 présente un entonnoir 43 et une came 44 prévue pour actionner le clapet à ressort 20. La pièce mobile de commande 42 est reliée à un bouton de manoeuvre 45 monté sur la face latérale extérieure 32 du réceptacle de vidange 3.

Le bouton de manoeuvre 45 entraîne la pièce 42 en rotation. La paroi latérale du conduit 41 présente une ouverture de remplissage 46 entourée par un joint torique 47 de manière à assurer une étanchéité entre le conduit 41 et la pièce mobile de commande 42. Le bouton de manoeuvre 45 est mobile entre une position dite d'utilisation correspondant aux figures 2 et 3 et une position dite de vidange correspondant aux figures 1 et 4. Dans la position de vidange, tel que mieux visible à la figure 4, l'entonnoir 43 est disposé au dessus de l'ouverture de remplissage 46, et la came 44 repousse le clapet 20.

L'appareil comporte un dispositif de sécurité 25 destiné à empêcher le retrait du réceptacle de vidange 3 lorsque le clapet 20 est ouvert. A cet effet l'extrémité inférieure du conduit 15 présente une fente longitudinale 26 et la came 44 agencée en partie dans l'entonnoir 43 vient s'insérer dans la fente 26 lors de la rotation de la pièce mobile de commande 42 vers la position de vidange, tel que montré à la figure 4. Le mécanisme de commande 40 comporte ainsi un pêne 27 prévu pour coopérer avec une gâche 28 appartenant au clapet 20 lorsque le clapet est amené en position ouverte, le pêne 27 étant formé par une face latérale de la came 44, la gâche 28 étant formée par la fente 26.

L'appareil comporte un autre dispositif de sécurité 50 destiné à empêcher deux vidanges consécutives.

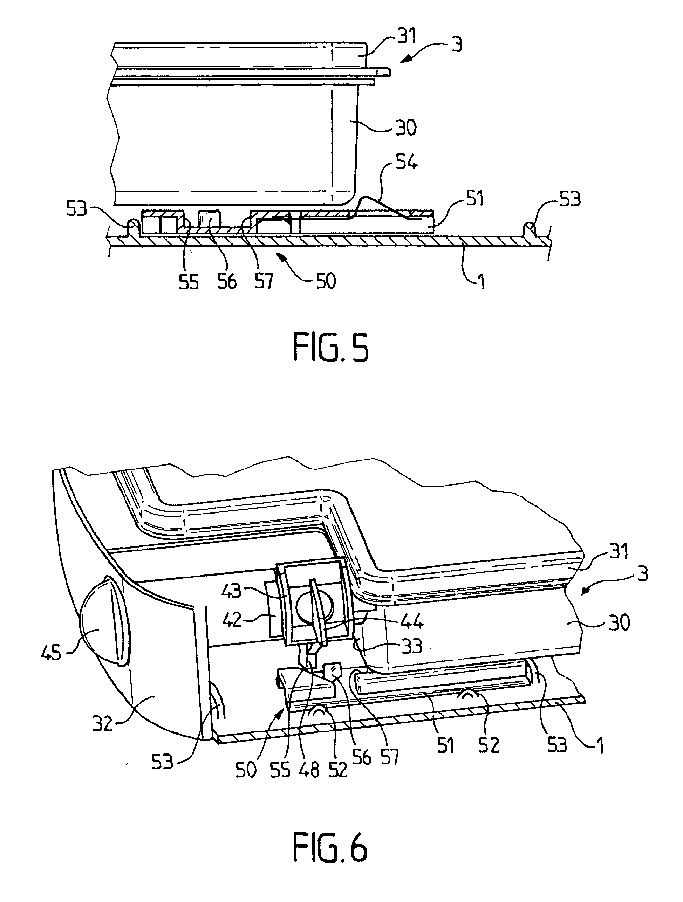

A cet effet une pièce mobile de sécurité 51 est agencée entre le boîtier 1 et le réceptacle de vidange 3. La pièce 51 est guidée par des butées de guidage 52. Le mouvement longitudinal de la pièce 51 est limité par des butées d'arrêt 53. Une lame flexible 54 montée sur la pièce 51 est prévue pour venir en butée contre le réceptacle de vidange 3 lors de la mise en place dudit réceptacle dans le boîtier 1, tel que montré à la figure 5, puis pour prendre appui contre le réceptacle de vidange 3 lorsque la pièce 51 est bloquée par l'une des butées 53.

La figure 6 montre le réceptacle de vidange 3 après sa mise en place dans le boîtier 1. La pièce 51 comporte une première came 55 prévue pour coopérer avec une patte 48 issue de la pièce mobile de commande 42 lorsque le bouton de manoeuvre 45 est amené en position de vidange après la mise en place du réceptacle de vidange 3. La pièce 51 comporte une deuxième came 56 prévue pour coopérer avec la patte 48 lorsque le bouton de manoeuvre 45 est ramené en position d'utilisation après une vidange. La pièce 51 comporte une butée de blocage 57 prévue pour bloquer la rotation de la pièce mobile de commande 42 lorsque le bouton de manoeuvre 45 est ramené vers la position de vidange après une nouvelle utilisation sans retrait du réceptacle de vidange 3.

La présente réalisation fonctionne de la manière suivante.

Lorsque l'utilisateur met en place le réceptacle de vidange 3 dans le boîtier 1, la came 44 ne peut atteindre la pièce mobile d'obturation 21 du clapet 20 protégée par l'extrémité inférieure du conduit 15. Le réceptacle de vidange 3 vient en contact avec la lame flexible 54, tel que montré à la figure 5, et repousse la pièce mobile de sécurité 51 dans une position éloignée de l'ouverture latérale du boîtier 1. Lorsque la pièce 51 vient en butée, la lame flexible 54 s'efface et vient frotter contre le réceptacle de vidange 3. La lame flexible 54 permet de maintenir en place la pièce 51 par rapport au réceptacle de vidange 3.

Lorsque le réceptacle de vidange 3 est en place dans le boîtier 1, tel qu'illustré à la figure 6, l'utilisateur peut tourner le bouton de manoeuvre 45 vers la position de vidange représentée aux figures 1 et 4. Lors de la rotation de la pièce de commande 42, la patte 48 repousse la came 55 et déplace la pièce de sécurité 51 dans une position intermédiaire. En fin de course la came 44 repousse la pièce d'obturation 21 du clapet 20, tel que montré à la figure 4. Le liquide contenu dans la cuve 2 peut s'écouler par l'entonnoir 43 et l'ouverture de remplissage 46 du conduit 41 vers le réceptacle 3 si le clapet thermostatique 16 est ouvert. La came 44 bloquée par la fente 26 interdit le retrait du réceptacle de vidange 3.

Pour retirer le réceptacle de vidange 3 du boîtier 1, l'utilisateur ramène le bouton de manoeuvre 45 vers la position d'utilisation, montrée à la figure 3. Lors de la rotation de la pièce de commande 42, la patte 48 repousse la came 56 et déplace la pièce de sécurité 51 dans une position avancée montrée à la figure 2. La came 44 libère le dispositif de vidange 10 et le clapet 20 se referme. La patte 48 libère la pièce de sécurité 51. L'utilisateur peut alors retirer le réceptacle de vidange 3.

Grâce à la pièce de sécurité 51, une nouvelle vidange est interdite si le réceptacle de vidange 3 n'a pas été retiré du boîtier 1 puis remis en place. En effet, lors de la rotation de la pièce de commande 42 la patte 48 est arrêtée par la butée 57 et la came 44 ne peut atteindre le clapet 20. Pour autoriser une nouvelle vidange, il est nécessaire de retirer le réceptacle 3 jusqu'à la libération de la lame flexible 54, tel qu'illustré à la figure 5, afin de repousser la pièce 51 par l'intermédiaire de la lame flexible 54 lors de la remise en place du réceptacle 3. Un retrait moins important du réceptacle 3 ne garantit pas que la remise en place du réceptacle 3 permette de repousser la pièce 51 par l'intermédiaire de la lame flexible 54.

Le dispositif de sécurité 50 interdit de procéder à une deuxième vidange si le réceptacle de vidange 3 n'a pas été retiré au moins partiellement du boîtier 1 puis remis en place, grâce aux déplacements de la pièce 51 lors de la manoeuvre du dispositif de commande 40 de la position d'utilisation vers la position de vidange et retour, ainsi que lors du retrait puis de la remise en place du réceptacle de vidange 3.

La capacité du réceptacle de vidange 3 peut ainsi être limitée au contenu de la cuve 2, sans risquer de débordement dû à deux vidanges consécutives de la cuve 2.

A titre de variante, le mécanisme de commande 40 de la vidange peut ne pas être solidaire du bac récupérateur 30, et par exemple être monté sur le couvercle 31 du réceptacle de vidange 3.

A titre de variante, la pièce de commande 42 n'est pas nécessairement montée entre le bouton de manoeuvre 45 et le réceptacle de vidange 3.

A titre de variante, le bouton de manoeuvre 45 peut être monté sur une face latérale du réceptacle de vidange logée à l'intérieur du boîtier lorsque ledit réceptacle est en place dans le boîtier. Le bouton de manoeuvre peut alors être accessible par une trappe ménagée dans la paroi latérale du boîtier.

A titre de variante, le bouton de manoeuvre 45 peut être monté sur le boîtier 1 de l'appareil, par exemple à l'opposé de la fenêtre latérale du boîtier permettant l'insertion du réceptacle de vidange. La connexion entre le bouton de manoeuvre et le mécanisme de commande se fait lors de l'insertion du réceptacle de vidange dans le boîtier.

A titre de variante, la lame flexible 54 peut être montée sur une des faces externes du réceptacle de vidange ou encore sur une autre face interne du boîtier.

A titre de variante, le réceptacle de vidange 3 peut former un socle recevant de manière amovible le boîtier entourant la cuve.

La présente invention n'est nullement limitée aux exemples de réalisation décrits et à leurs variantes, mais englobe de nombreuses modifications dans le cadre des revendications.

## Revendications

1. Appareil de cuisson comportant un boîtier et dans ce boîtier (1) une cuve (2) prévue pour recevoir un bain de cuisson, munie d'un dispositif de vidange (10) prévu pour un déversement du contenu de la cuve (2) dans un réceptacle de vidange (3), le dispositif de vidange (10) étant associé à un bouton de manoeuvre (45), le réceptacle de vidange (3) étant agencé de manière amovible par rapport au boîtier (1), **caractérisé en ce que** le bouton de manoeuvre (45) est susceptible d'entraîner un clapet (20) appartenant au dispositif de vidange (10) par l'intermédiaire d'un mécanisme de commande (40) monté sur le réceptacle de vidange (3).

2. Appareil de cuisson selon la revendication 1, **caractérisé en ce que** le bouton de manoeuvre (45) est monté sur le réceptacle de vidange (3).

3. Appareil de cuisson selon l'une des revendications 1 ou 2, **caractérisé en ce que** le boîtier (1) comporte une ouverture latérale dans laquelle peut être inséré au moins partiellement le réceptacle de vidange (3).

4. Appareil de cuisson selon la revendication 3, **caractérisé en ce que** le bouton de manoeuvre (45) est monté sur une face latérale extérieure (33) du réceptacle de vidange (3).

5. Appareil de cuisson selon l'une des revendications 1 à 4, **caractérisé en ce que** le mécanisme de commande (40) comporte une came (44) prévue pour coopérer avec le clapet (20).

6. Appareil de cuisson selon la revendication 5, **caractérisé en ce que** la came (44) est portée par une pièce mobile de commande (42) montée sur un conduit d'admission (41) communiquant avec le réceptacle de vidange (3), la pièce mobile de commande (42) comportant un entonnoir (43) prévu pour alimenter une ouverture de remplissage (46) du conduit d'admission (41) lorsque la came (44) ouvre le clapet (20).

7. Appareil de cuisson selon la revendication 6, **caractérisé en ce que** la pièce mobile de commande (42) est entraînée en rotation par le bouton de manoeuvre (45).

8. Appareil de cuisson selon l'une des revendications 6 ou 7, **caractérisé en ce que** la came (44) est agencée au dessus de l'entonnoir (43).

9. Appareil de cuisson selon l'une des revendications 1 à 8, **caractérisé en ce que** le mécanisme de commande (40) comporte un pêne (27) prévu pour coopérer avec une gâche (28) appartenant au clapet (20) lorsque le clapet (20) est amené en position ouverte.

10. Appareil de cuisson selon l'une des revendications 5 à 8, **caractérisé en ce que** le mécanisme de commande (40) comporte un pêne (27) prévu pour coopérer avec une gâche (28) appartenant au clapet (20) lorsque le clapet (20) est amené en position ouverte, le pêne (27) étant formé par une face latérale de la came (44).

11. Appareil de cuisson selon la revendication 10, **caractérisé en ce que** la gâche (28) est formée par une fente longitudinale (26) ménagée à l'extrémité inférieure d'un conduit (15) dans lequel est logé une pièce mobile d'obturation (21) du clapet (20) déplacée par la came (44).

12. Appareil de cuisson selon l'une des revendications 1 à 11, **caractérisé en ce qu**'une pièce mobile de sécurité (51) comporte une première came (55) prévue pour être entraînée par le mécanisme de commande (40) lorsque le bouton de manoeuvre (45) est manoeuvré pour ouvrir le clapet (20), une deuxième came (56) prévue pour être entraînée par le mécanisme de commande (40) lorsque le bouton de manoeuvre (45) est manoeuvré ensuite pour fermer le clapet (20), et une butée de blocage (57) prévue pour bloquer le mécanisme de commande (40) afin d'empêcher l'ouverture du clapet (20).

13. Appareil de cuisson selon la revendication 12, **caractérisé en ce que** la pièce mobile de sécurité (51) est repoussée par le réceptacle de vidange (3) lors de la mise en place dudit réceptacle dans le boîtier (1) par l'intermédiaire d'une lame flexible (54) s'effaçant lorsque la pièce mobile de sécurité (51) atteint une butée d'arrêt (53).

14. Appareil de cuisson selon l'une des revendications 1 à 13, **caractérisé en ce que** le dispositif de vidange (10) comporte un clapet thermostatique (16).

15. Appareil de cuisson selon l'une des revendications 1 à 14, **caractérisé en ce qu**'un filtre (13) est placé en amont du dispositif de vidange (10).

## Claims

1. A cooking appliance having a housing and, inside said housing (1), a vessel (2) designed to receive a cooking bath and provided with a drain device (10) designed to drain off the contents of the vessel (2) into a drain receptacle (3), the drain device (10) being associated with a control knob (45), the drain receptacle (3) being arranged removably relative to the housing (1), said cooking appliance being **characterized in that** the control knob (45) is suitable for driving a valve (20) belonging to the drain device (10) via a control mechanism (40) mounted on the drain receptacle (3).

2. A cooking appliance according to claim 1, **characterized in that** the control knob (45) is mounted on the drain receptacle (3).

3. A cooking appliance according to claim 1 or claim 2, **characterized in that** the housing (1) is provided with a side opening into which the drain receptacle (3) can be inserted at least in part.

4. A cooking appliance according to claim 3, **characterized in that** the control knob (45) is mounted on an outside side face (33) of the drain receptacle (3).

5. A cooking appliance according to any one of claims 1 to 4, **characterized in that** the control mechanism (40) includes a cam (44) designed to co-operate with the valve (20).

6. A cooking appliance according to claim 5, **characterized in that** the cam (44) is carried by a moving control piece (42) mounted on an admission duct (41) communicating with the drain receptacle (3), the moving control piece (42) including a funnel (43) designed to feed a filling opening (46) of the admission duct (41) when the cam (44) opens the valve (20).

7. A cooking appliance according to claim 6, **characterized in that** the moving control piece (42) is driven in rotation by the control knob (45).

8. A cooking appliance according to claim 6 or claim 7, **characterized in that** the cam (44) is arranged above the funnel (43).

9. A cooking appliance according to any one of claims 1 to 8, **characterized in that** the control mechanism (40) includes a bolt (27) designed to co-operate with a keeper (28) belonging to the valve (20) when the valve (20) is brought into the open position.

10. A cooking appliance according to any one of claims 5 to 8, **characterized in that** the control mechanism (40) includes a bolt (27) designed to co-operate with a keeper (28) belonging to the valve (20) when the valve (20) is brought into the open position, the bolt (27) being formed by a side face of the cam (44).

11. A cooking appliance according to claim 10, **characterized in that** the bolt (28) is formed by a longitudinal slot (26) provided at the bottom end of a duct (15) in which a moving closure piece (21) of the valve (20) is received that is moved by the cam (44).

12. A cooking appliance according to any one of claims 1 to 11, **characterized in that** a moving safety piece (51) has a first cam (55) designed to be driven by the control mechanism (40) when the control knob (45) is operated to open the valve (20), a second cam (56) designed to be driven by the control knob (40) when the control knob (45) is then operated to close the valve (20), and a blocking abutment (57) designed to block the control mechanism (40) in order to prevent the valve (20) from opening.

13. A cooking appliance according to claim 12, **characterized in that** the moving safety piece (51) is pushed away by the drain receptacle (3) while said receptacle is being put in place in the housing (1) via a flexible blade (54) that retracts when the moving safety piece (51) reaches a stop abutment (53).

14. A cooking appliance according to any one of claims 1 to 13, **characterized in that** the drain device (10) is provided with a thermostatic valve (16).

15. A cooking appliance according to any one of claims 1 to 14, **characterized in that** a filter (13) is placed upstream from the drain device (10).

## Patentansprüche

1. Gargerät mit einem Gehäuse und einer in diesem Gehäuse (1) angeordneten Wanne (2), die für die Aufnahme eines Garbads vorgesehen und mit einer Entleerungsvorrichtung (10) versehen ist, welche für ein Abfließen des Inhalts der Wanne (2) in einen Auffangbehälter (3) vorgesehen ist, wobei die Entleerungsvorrichtung (10) einem Betätigungsknopf (45) zugeordnet ist, wobei der Auffangbehälter (3) bezüglich des Behälters (1) abnehmbar angeordnet ist, **dadurch gekennzeichnet, dass** der Betätigungsknopf (45) ein Ventilelement (20) über ein Steuermechanismus (40) antreiben kann, der am Auffangbehälter (3) angebracht ist, wobei das Ventilelement (20) zur Entleerungsvorrichtung (10) gehört.

2. Gargerät nach Anspruch 1, **dadurch gekennzeichnet, dass** der Betätigungsknopf (45) am Auffangbehälter (3) angebracht ist.

3. Gargerät nach Anspruch 1 oder 2, **dadurch gekennzeichnet, dass** das Gehäuse (1) eine seitliche Öffnung aufweist, in welcher der Auffangbehälter (3) mindestens teilweise einsetzbar ist.

4. Gargerät nach Anspruch 3, **dadurch gekennzeichnet, dass** der Betätigungsknopf (45) an einer äußere Seitenwand (33) des Auffangbehälters (3) angebracht ist.

5. Gargerät nach einem der Ansprüche 1 bis 4, **dadurch gekennzeichnet, dass** der Steuermechanismus (40) eine Kurvenfläche (44) aufweist, die zur Zusammenwirkung mit dem Ventilelement (20) vorgesehen ist.

6. Gargerät nach Anspruch 5, **dadurch gekennzeichnet, dass** der Kurvenfläche (44) von einem beweglichen Steuerteil (42) getragen ist, das auf einer Einlassleitung (41) angebracht ist, die mit dem Auffangbehälter (3) verbunden ist, wobei das bewegliche Steuerteil (42) einen Trichter (42) aufweist, der zum Speisen einer Öffnung (46) zum Füllen der Einlassleitung (41) vorgesehen ist, wenn die Kurvenfläche das Ventilelement (20) öffnet.

7. Gargerät nach Anspruch 6, **dadurch gekennzeichnet, dass** das bewegliche Steuerteil (42) durch den Betätigungsknopf (45) in Drehung versetzt ist.

8. Gargerät nach einem der Ansprüche 6 oder 7, **dadurch gekennzeichnet, dass** die Kurvenfläche (44) oberhalb des Trichters (43) angeordnet ist.

9. Gargerät nach einem der Ansprüche 1 bis 8, **dadurch gekennzeichnet, dass** der Steuermechanismus (40) einen Riegel (27) aufweist, der zur Zusammenwirkung mit einem zum Ventilelement (20) gehörenden Schließhaken (28) vorgesehen ist, wenn das Ventilelement (20) in die geöffnete Stellung gebracht wird.

10. Gargerät nach einem der Ansprüche 5 bis 8, **dadurch gekennzeichnet, dass** der Steuermechanismus (40) einen Riegel (27) aufweist, der zur Zusammenwirkung mit einem zum Ventilelement (20) gehörenden Schließhaken (28) vorgesehen ist, wenn das Ventilelement (20) in die geöffnete Stellung gebracht wird, wobei der Riegel (27) durch eine Seitenfläche der Kurvenfläche (44) gebildet ist.

11. Gargerät nach Anspruch 10, **dadurch gekennzeichnet, dass** der Schließhaken (28) durch einen Längsspalt (26) gebildet ist, der am unteren Ende einer Leitung (15) angebracht ist, in welcher ein bewegliches Teil (21) zum Verschließen des Ventilelements (20) eingebracht ist, das von der Kurvenfläche (44) verlagert wird.

12. Gargerät nach einem der Ansprüche 1 bis 11, **dadurch gekennzeichnet, dass** ein bewegliches Sicherheitsteil (51) eine erste Kurvenfläche (55) aufweist, die dazu vorgesehen ist, vom Steuermechanismus (40) angetrieben zu werden, wenn der Betätigungsknopf (45) zum Öffnen des Ventilelements (20) betätigt wird, eine zweite Kurvenfläche (56), die dazu vorgesehen ist, vom Steuermechanismus (40) angetrieben zu werden, wenn der Betätigungsknopf anschließend zum Schließen des Ventilelements (20) betätigt wird, sowie einen Blockierungsanschlag (57), der zum Blockieren des Steuermechanismus (40) vorgesehen ist, um das Öffnen des Ventilelements (20) zu verhindern.

13. Gargerät nach Anspruch 12, **dadurch gekennzeichnet, dass** beim Einsetzen des Auffangbehälters ins Gehäuse (1) das bewegliche Sicherheitsteil (51) durch den Auffangbehälter (3) mittels einer flexiblen Lamelle (54) zurückgedrängt wird, die sich zurückzieht, wenn das bewegliche Sicherheitsteil (51) einen Blockierungsanschlag (54) erreicht.

14. Gargerät nach einem der Ansprüche 1 bis 13, **dadurch gekennzeichnet, dass** die Entleerungsvorrichtung (10) ein thermostatisches Ventilelement (16) aufweist.

15. Gargerät nach einem der Ansprüche 1 bis 14, **dadurch gekennzeichnet, dass** stromaufwärts des thermostatischen Ventilelements (16) ein Filter (14) angeordnet ist.
